# EUROPEAN PATENT APPLICATION

(11) **EP 1 426 743 A2**
(43) Date of publication of application: **09.06.2004**
(21) Application number: 03447281.1
(22) Date of filing: 04.12.2003
(51) Int. Cl.: G01G 21/23

(54) **Container weighing system**

(30) Priority: 04.12.2002 BE 200200694; 16.09.2003 BE 200300498
(71) Applicant: PM Group PLC, BD2 1AG Shipley, West Yorkshire (GB)
(72) Inventor: Nuyts, Ludo, 2360 Oud-Turnhout (BE)
(74) Representative: Van Malderen, Michel

(57) **Abstract**

The present invention is related to a system for weighing containers, comprising at least two separate weighing beams, connected to fixed structures via load cells. The weighing beams can be placed in the direction perpendicular or parallel to the container's longitudinal direction. The beams can be connected by two further beams to obtain a weighing frame.

## Description

### Field of the invention

The present invention is related to a system for weighing containers.

### State of the art

Weighing bridges are known in the art for weighing large bulk containers or trucks. However, these installations are expensive and technically complex. They usually involve the creation of a pit the surface of which corresponds to the size of the weighed container. There is a need therefore for more simplified systems, which can be put in place without extensive impact on the environment, for example for use in public waste collection areas.

### Aims of the invention

The present invention aims to provide such a simplified container weighing system.

### Short description of the drawings

Fig. 1 and 2 represent prior art systems for weighing a container.
Fig. 3 represents a container weighing system according to a first embodiment of the present invention.
Fig. 4 represents a three-view picture of a container weighing system according to a first embodiment of the present invention.
Fig. 5 represents a detailed view of the embodiment of figure 4.

### Description of the invention

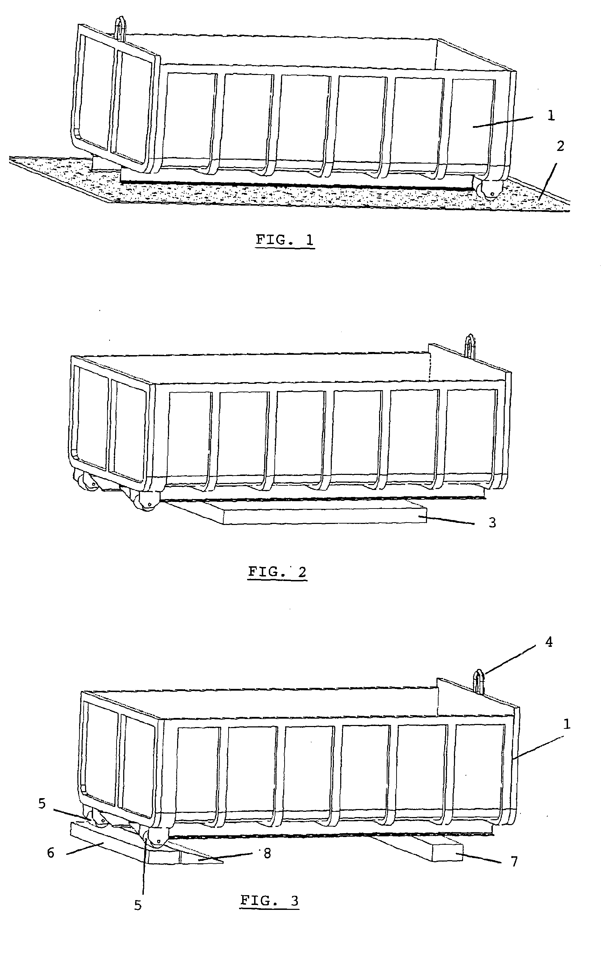

Figure 1 shows the classic weighing bridge, known in the art, which is basically a platform 2, installed above a pit, and onto which the container 1 is placed for weighing. The platform is connected to load cells which allow to record the weight. A smaller platform 3 is equally known (fig. 2), but still quite complex to implement.

The invention is related to a container weighing system as described in the appended claims. A first embodiment of the invention is shown in figure 3. It is primarily a system for weighing containers 1 of the type shown, i.e. containers for transporting bulk goods, or used for collecting waste in publicly accessible waste collection areas. Trucks who transport this type of container are generally equipped with a lifting device, by which the container is lifted from the truck at one of its short sides by a lifting hook 4, and lowered onto the ground until the opposite short side touches the ground. This short side has rolls 5, allowing the container to roll over the ground, until it is completely deposited. Any weighing system of the invention is especially suitable for this type of container, but may be used also for other types.

The system of figure 3 comprises two separate weighing beams 6 and 7, placed in a transverse direction, i.e. perpendicular to the longitudinal direction of the container. These are beams which are connected to a fixed structure through weight sensors, so-called 'load cells'. In figure 3, the fixed structure is not visible, as it is placed underneath the beams. Preferably, two pits are formed over which the beams are placed, i.e. in the way known for classical weighing bridges. Load cells are present between the beams and the fixed structure (basically the bottom or sides of the pits), allowing to record the weight placed on the beams. The beams may extend above ground level, as shown in the embodiment of figure 3, or their top surface may be level with ground level.

In the system of figure 3, the truck bearing the container will rear up to the right beam 7. The container is lifted from the truck by the latter's lifting device, which grabs the hook 4. It is than lowered so that the rolls 5 are placed on the ground between the two beams. Via the rolls 5, the container is then rolled onto the left beam 6. For this purpose, a ramp 8 is present on the right hand side of this beam. Then, the container is lowered onto the right beam 7, and released, so that it is ready for weighing.

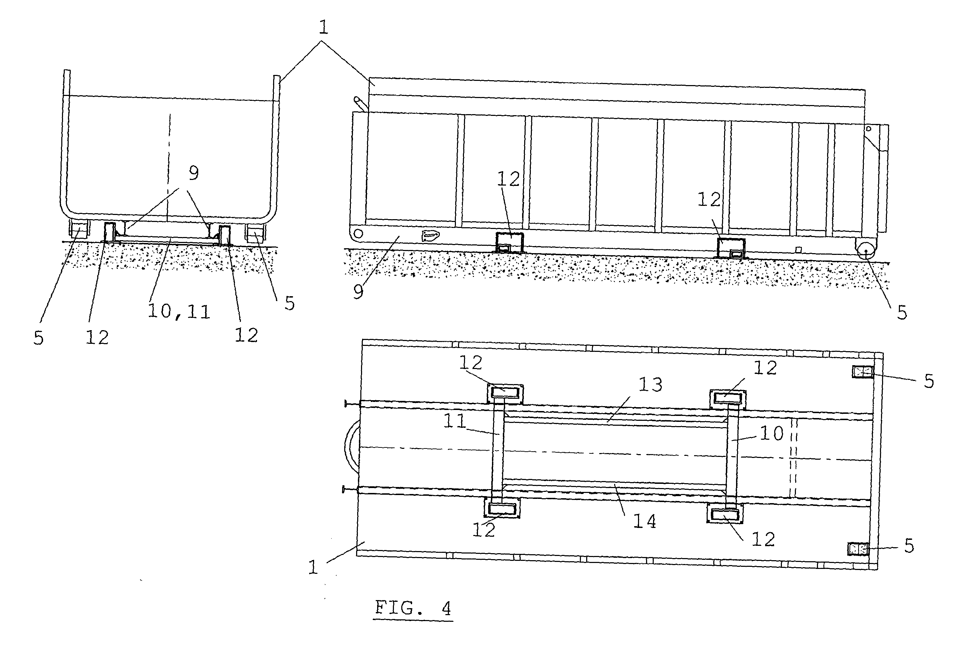

A second embodiment is shown in figure 4. The container 1 is again visible. It is equipped with two support ribs 9, and rolls 5. Again, the system of the invention comprises two transverse weighing beams 10 and 11. In this case, the beams are connected to fixed structures 12 which are placed above ground. The connection between the weighing beams and the fixed structure again takes place through load cells (not shown).

In this embodiment, the weighing routine is the following :
The truck rears up to the beams until it is close to the left beam 11. The container is lifted from the truck and the rolls are placed on the ground on a location behind the second beam 10, i.e. to the right of the beam 10, as seen on the drawing. It is then further lowered until it rests on both beams 11 and 10. It is then ready for weighing.
The system of figure 4 comprises two additional longitudinal beams 13 and 14, connecting the transverse beams, thereby forming a rectangular weighing frame, which is more solid. However, the system of figure 4 equally works with two separate beams 10 and 11.

Another embodiment (not shown) works with two separate longitudinal beams, i.e. parallel to the container's longitudinal direction, which are then connected directly to the fixed structures. These beams may also be made in a way similar to the beams shown in figure 3, placed above elongated pits in the ground, either extending above said pits or level with the ground. In this embodiment, the length of the beams and the distance between the beams must be calculated with sufficient accuracy, in order for the container to be carried by these beams in an adequate way. Preferably, these beams are long enough to allow the container to be placed onto the beams, and not on a location behind the beams, as in the embodiment of figure 4. It is advisable to apply a lubricant to the beams so that the container can glide and/or roll over these longitudinal beams prior to the final deposition and weighing.

The load cells used in the present invention can be of any known type. It is advantageous to apply the embodiment of figure 4, wherein the beams are suspended from the fixed structures through the load cells. This allows to limit the height of the weighing beams, thereby facilitating the positioning of the container. However, it is equally possible to have an embodiment wherein the beams are resting on top of the fixed structures, with a load cell in-between the beam and the structure.

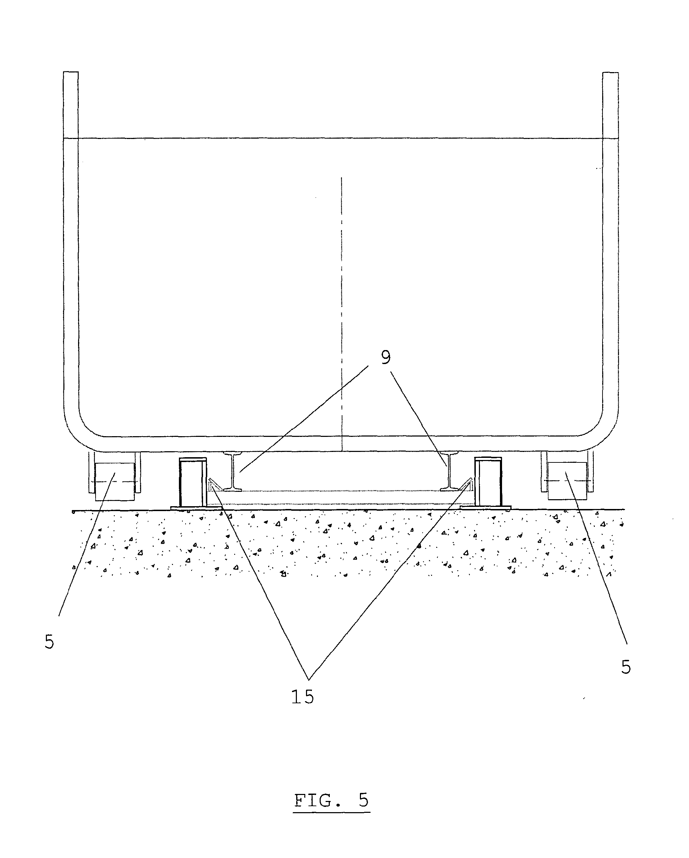

The transverse weighing beams are preferably equipped with triangular parts 15, which facilitate the positioning of the support ribs 2 onto the beams. This is shown in more detail in figure 5.

## Claims

1. A system for weighing containers, said system comprising at least two weighing beams (6,7 or 10,11), connected to a fixed structure.

2. The system according to claim 1, comprising two weighing beams, placed essentially perpendicular to the longitudinal direction of the container (1) to be weighed.

3. The system according to claim 2, wherein the top surface of said beams extends above ground level.

4. The system according to claim 2, wherein the top surface of said beams is essentially level with the ground.

5. The system according to claim 3, further comprising a ramp (8), placed before one the two beams.

6. The system according to claim 2, wherein each beam is connected to two fixed structures (12) at its ends, said fixed structures being placed above ground level.

7. The system according to claim 6, wherein said beams further comprise triangular parts (15) at their ends.

8. The system according to claim 6 or 7, wherein said beams are interconnected by two additional beams (13,14), thereby forming a weighing frame.

9. The system according to claim 1, wherein two weighing beams are present, which are essentially oriented along the longitudinal direction of the container to be weighed.

10. The system according to any one of claims 6 to 10, wherein the weighing beams are suspended from the fixed structures, via the weight sensors.
